# FASCICULE DE BREVET EUROPEEN

(11) **EP 0 926 281 B1**
(45) Date de publication et mention de la délivrance du brevet: **25.07.2001**
(21) Numéro de dépôt: 98420235.8
(22) Date de dépôt: 17.12.1998
(51) Int. Cl.: D03C 3/20, D03C 5/00, H02K 7/10

(54) **Dispositif de blocage d'un actionneur rotatif électrique pour la formation de la foule sur un métier à tisser, mécanique d'armure et métier à tisser**
Verriegelungsmechanismus eines elektrischen Drehaktuators für die Fachbildung in einer Webmaschine, Fachbildungsvorrichtung und Webmaschine
Locking device for a rotary electrical actuator of a shedding mechanism on a loom, shedding mechanism and loom

(30) Priorité: 24.12.1997 FR 9716736
(43) Date de publication de la demande: 30.06.1999
(73) Titulaire: STAUBLI FAVERGES, 74210 Faverges (FR)
(72) Inventeur: Braun, Dominique, 74210 Faverges (FR); Bourgeaux, Pierre, Lachat, 74330 Poisy (FR); Froment, Jean-Paul, 74210 Doussard (FR)
(74) Mandataire: Myon, Gérard Jean-Pierre

(56) Documents cités:
- EP-A- 0 353 005
- EP-A- 0 750 061
- US-A- 5 069 256
- US-A- 5 070 266

## Description

L'invention a trait à un dispositif de blocage pour actionneur rotatif électrique destiné à la formation de la foule sur un métier à tisser, notamment, à la commande des arcades d'une mécanique d'armure de type Jacquard ou des cadres de lisses d'un métier équipé d'une ratière. L'invention a également irait à une mécanique d'armure et à un métier à tisser équipé d'une telle mécanique.

Dans les mécaniques d'armure de type Jacquard, il est connu d'entraîner, en opposition de phase, deux cadres portant chacun une multiplicité de griffes ou couteaux horizontaux aptes à déplacer verticalement des crochets reliés aux arcades par un mécanisme à poulies ou à moufle. Des dispositifs mécaniques ou électromécaniques sont prévus pour immobiliser ces crochets le long de leur course verticale. Ce genre de dispositif connu nécessite une puissance importante pour la manoeuvre des cadres de griffes, cette puissance étant fournie par l'arbre moteur du métier à tisser, ce qui induit un surdimensionnement de ce métier.

Il est également connu d'utiliser un moteur rotatif tel qu'un moteur pas à pas ou un servo-moteur pour commander linéairement une cordelette appartenant à un métier à tisser, voir par exemple EP 353 005 A.

Un métier à tisser ne fonctionne pas en permanence, de sorte qu'il doit pouvoir être arrêté en fin de poste ou pour des opérations de maintenance. Enfin, un arrêt de sécurité équipe classiquement les métiers à tisser. Pour les raisons qui précèdent, il est opportun de prévoir un dispositif de blocage pour immobiliser les actionneurs rotatifs, c'est-à-dire les moteurs électriques de commande des poulies, afin qu'en position arrêtée le métier à tisser conserve sa position d'arrêt, ce qui permet un redémarrage rapide, sans défaut dans la trame du tissu en cours de fabrication. Compte tenu du grand nombre d'actionneurs appartenant à une mécanique d'armure, le dispositif de blocage associé doit être compact et de construction simple afin d'offrir un prix de revient bas et une grande fiabilité. En outre, la consommation électrique d'un dispositif de blocage doit être la plus faible possible afin de ne pas engendrer des coûts de fonctionnement trop importants.

Dans cet esprit, l'invention concerne un dispositif de blocage d'un actionneur rotatif électrique pour la formation de la foule sur un métier à tisser, ledit actionneur étant muni d'un rotor d'entraînement d'une poulie pour l'enroulement d'une arcade, caractérisé en ce qu'il comprend une coupelle de blocage, entraînée par ledit rotor, et une languette commandée, portant des moyens d'immobilisation en rotation de ladite coupelle.

Grâce à l'invention, le rotor et la poulie qu'il porte peuvent être efficacement immobilisés par l'action de la languette commandée sur la coupelle. Le dispositif de l'invention présente, en outre, l'avantage d'être compact, fiable et peu consommateur d'énergie.

Selon un premier aspect avantageux de l'invention, la coupelle porte au moins un premier relief, la languette portant au moins un second relief complémentaire apte à venir en prise avec le premier relief, la prise des premier et second reliefs permet un blocage efficace de la coupelle en rotation.

Selon un autre aspect avantageux de l'invention, la languette est pourvue d'un point fixe et d'une extrémité mobile portant le second relief et chargée par des moyens élastiques vers le premier relief. Ainsi, la position par défaut de la languette obtenue, en l'absence de commande, grâce aux moyens élastiques correspond à une position en prise des reliefs, c'est-à-dire au blocage de l'actionneur.

Selon un autre aspect avantageux, les moyens élastiques permettent un mouvement d'éjection des premier et second reliefs en cas de surcharge de la coupelle, l'un au moins des premier et second reliefs ayant une forme globalement conique, tronconique, en triangle ou arrondie. Ceci autorise, par exemple, un dégagement du bec de la languette par rapport à une rainure de la coupelle lorsqu'un effort exercé par la partie tournante de l'actionneur serait de nature à endommager le dispositif de blocage.

Selon un autre aspect avantageux de l'invention, la languette porte une patte de manoeuvre apte à coopérer avec un organe de manoeuvre de la languette entre une position où le second relief est en prise avec le premier relief et une position où le second relief est dégagé par rapport au premier relief. Cette patte de manoeuvre, qui peut être réalisée par moulage conjointement avec le bec de façon à constituer une pièce monobloc, permet le déplacement de la languette entre ses deux positions stables.

Selon un autre aspect avantageux de l'invention, le premier relief et/ou la patte de manoeuvre sont surmoulés à l'extrémité libre de la languette. Ce mode de construction de la languette est de prix de revient peu élevé et permet un positionnement précis du premier relief et de la patte de manoeuvre par rapport à la languette, ce positionnement étant fiable dans le temps.

Selon un aspect particulièrement avantageux de l'invention, le dispositif comprend une tige munie d'au moins un épaulement et s'étendant à proximité d'une extrémité mobile de la languette, cette tige étant mobile en translation suivant son plus grand axe, la patte de manoeuvre de la languette étant apte à être déplacée par l'épaulement de la tige. Cette tige constitue donc un moyen de commande simple et efficace de la languette.

Selon un autre aspect avantageux de l'invention, le dispositif comprend un moyen de commande simultanée de plusieurs languettes aptes à coopérer avec des coupelles appartenant à plusieurs actionneurs adjacents. Cet aspect de l'invention est à rapprocher du fait qu'un métier à tisser du type Jacquard comprend un grand nombre d'arcades pouvant atteindre, voire dépasser, 10 000, et par voie de conséquence un grand nombre d'actionneurs. L'invention permet donc de commander plusieurs actionneurs simultanément, ce qui correspond au fait que le blocage des actionneurs doit intervenir de façon concomitante lors de l'arrêt du métier à tisser.

On peut également prévoir que le dispositif est adapté au blocage des actionneurs d'un module comprenant plusieurs actionneurs, car il comprend plusieurs tiges s'étendant parallèlement les unes aux autres, à proximité des extrémités libres des languettes, les tiges étant commandées en translation par un excentrique commun s'étendant de façon substantiellement perpendiculaire aux tiges. Cette construction permet une manoeuvre groupée des languettes du dispositif de l'invention alors que le système utilisé pour leur manoeuvre est simple sur le plan mécanique, donc fiable.

Selon un autre aspect avantageux de l'invention, la coupelle est apte à coopérer avec un détecteur pour déterminer la position angulaire de l'actionneur. Ce détecteur ou codeur, qui peut être de tout type connu, et notamment optique ou infra-rouge, permet de contrôler, en permanence, la position de la coupelle mobile de l'actionneur, en mouvement ou immobilisé grâce au dispositif de blocage. La position de l'arcade ou des arcades commandée(s) par cet actionneur est ainsi indirectement connue.

Selon un autre aspect avantageux de l'invention, la languette est commandée entre deux positions stables de blocage et de libération de la coupelle. Ceci permet à la languette de demeurer dans une de ces positions lorsque l'actionneur n'est pas activé. La chaîne cinématique de commande de la languette peut comprendre un excentrique entraîné par un moteur électrique et mobile entre deux positions stables lorsque ce moteur n'est pas alimenté.

L'invention concerne également une mécanique d'armure qui comprend un ou des actionneur(s) équipé(s) d'un dispositif de blocage tel(s) que précédemment décrit(s) et un métier à tisser équipé d'une telle mécanique. Cette mécanique est plus simple à mettre en oeuvre et à entretenir que les dispositifs de l'art antérieur et permet une commande fil à fil d'un harnais de métier Jacquard. Le rendement d'un métier à tisser conforme à l'invention est donc sensiblement amélioré par rapport à la technique connue.

L'invention sera mieux comprise et d'autres avantages de celle-ci apparaîtront plus clairement à la lumière de la description qui va suivre de trois modes de réalisation d'un dispositif de blocage pour actionneur rotatif électrique de mécanique d'armure de type Jacquard conforme à son principe, donnée uniquement à titre d'exemple et faite en référence aux dessins annexés dans lesquels :
- La figure 1 est une représentation schématique de principe de plusieurs actionneurs rotatifs électriques, utilisés dans une mécanique d'armure de type Jacquard ;
- La figure 2 est une vue par l'arrière d'un module comprenant seize actionneurs du type représenté à la figure 1 ;
- La figure 3 est une coupe selon la ligne III-III à la figure 2 ;
- La figure 4 est une vue à plus grande échelle du détail IV de la figure 2, dans une première position ;
- La figure 5 est une vue analogue à la figure 4, dans une seconde position ;
- La figure 6 est une vue en perspective éclatée de certains éléments du détail des figures 4 et 5 ;
- La figure 7 est une vue analogue à la figure 4 pour un dispositif conforme à un second mode de réalisation de l'invention et
- La figure 8 est un schéma de principe d'un dispositif conforme à un troisième mode de réalisation de l'invention.

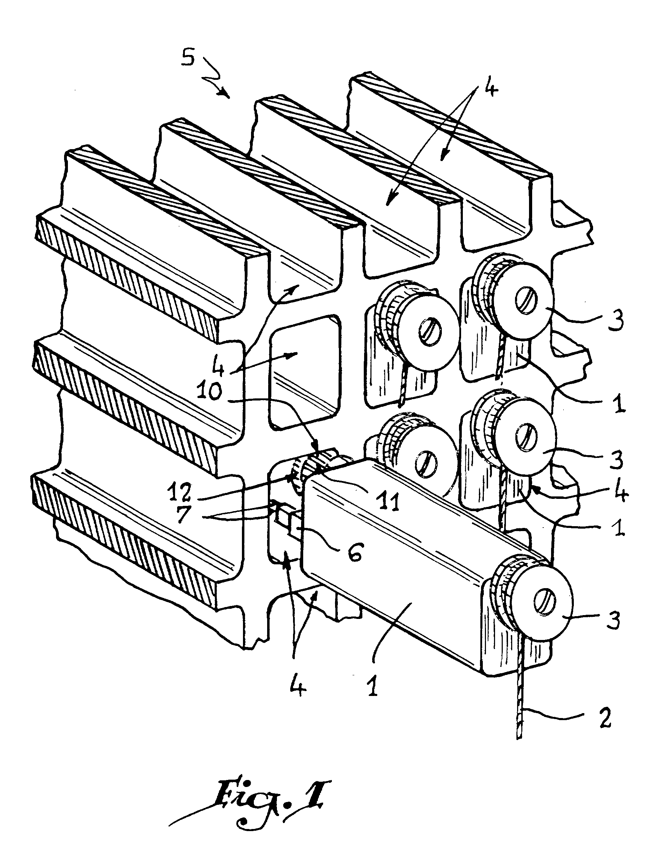

Les actionneurs 1 représentés à la figure 1 sont destinés à la commande des arcades 2 d'une mécanique d'armure de type Jacquard pour la formation de la foule sur un métier à tisser. Chaque actionneur 1 comprend une poulie 3 sur laquelle s'enroule l'arcade 2 correspondante en fonction de la position du rotor de l'actionneur considéré.

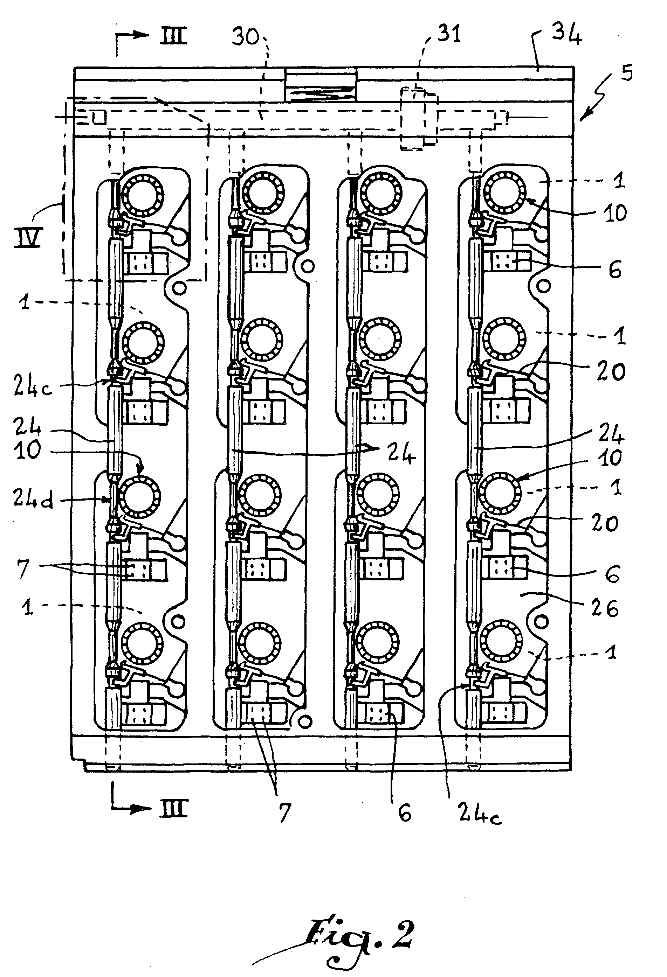

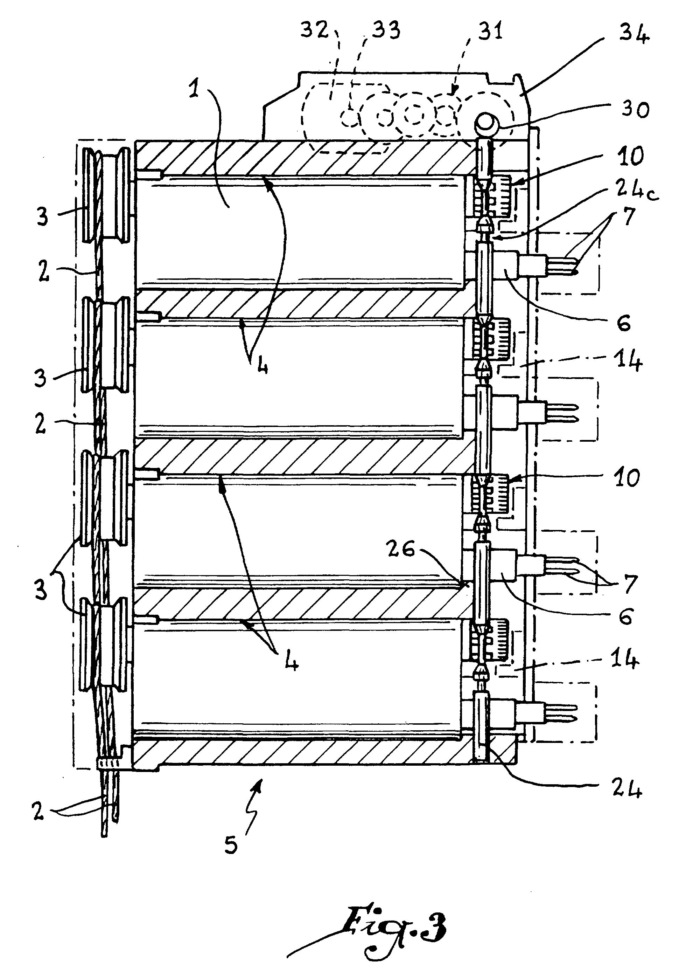

Compte tenu du grand nombre d'actionneurs nécessaires pour la manoeuvre des nombreuses arcades de la mécanique, les actionneurs 1 sont montés dans des compartiments 4 d'un boîtier 5. Comme il apparaît plus clairement aux figures 2 et 3, les actionneurs 1 peuvent être regroupés en modules comptant, par exemple, seize actionneurs. Dans ce cas, le boîtier 5 comprend seize emplacements 4. Sur leur face arrière, c'est-à-dire sur le côté opposé à la poulie 3, les actionneurs 1 sont munis d'une extension 6 portant des broches de connexion 7 pour l'alimentation électrique du ou des stators de l'actionneur 1. Lorsqu'un actionneur 1 est en place dans le compartiment 4 correspondant, l'extension 6 et les broches 7 dépassent à l'extérieur du compartiment 4 vers l'arrière du boîtier ou module 5.

Conformément à l'invention et afin d'obtenir une fonction de blocage efficace de chaque actionneur 1, le rotor de chaque actionneur porte une coupelle de blocage 10 dont la surface radiale périphérique est pourvue de rainures ou gorges 11. Par ailleurs, à proximité de la coupelle 10 de chaque actionneur 1 est disposée une languette 20 qui est destinée à immobiliser la coupelle 10. Chaque languette 20 est maintenue en position par l'une de ses extrémités 20a qui est prisonnière dans un logement 5a du boîtier 5. Ce logement 5a est façonné dans une nervure 5b disposée sur l'arrière du boîtier 5. Sur l'extrémité libre 20b opposée de la languette 20 est monté un bec ou crochet 21 apte à venir en prise avec l'une des rainures 11 de la coupelle 10.

Selon une variante non représentée de l'invention, il est également possible de prévoir que chaque languette 20 porte plusieurs becs disposés selon une circonférence de rayon sensiblement égal à celui de la coupelle 10 de façon à venir simultanément en prise avec plusieurs rainures 11.

Lorsque le bec 21 est en prise avec l'une des rainures 11, il immobilise la coupelle 10 qui est solidaire du rotor, non représenté, de l'actionneur 1. Ainsi, la poulie 3 de l'actionneur correspondant, et par voie de conséquence l'arcade 2, sont maintenues en position.

La languette 20 est une languette élastique, métallique et souple, dont l'élasticité peut être utilisée pour qu'elle ait en permanence tendance à revenir dans une position prédéterminée, à la manière d'une lame de ressort. Cette position prédéterminée peut être choisie pour que la languette 20 tende à appliquer élastiquement le bec 21 dans l'une des rainures 11. Le caractère élastique de la languette 20 permet également de prévoir, en cas de surcharge de la coupelle 10, l'éjection du bec 21 d'une rainure 11 dans laquelle il pénètre. Pour ce faire le bec 21 a un profil globalement tronconique ou en triangle. Les rainures 11 pourraient également avoir un profil tronconique ou en triangle correspondant.

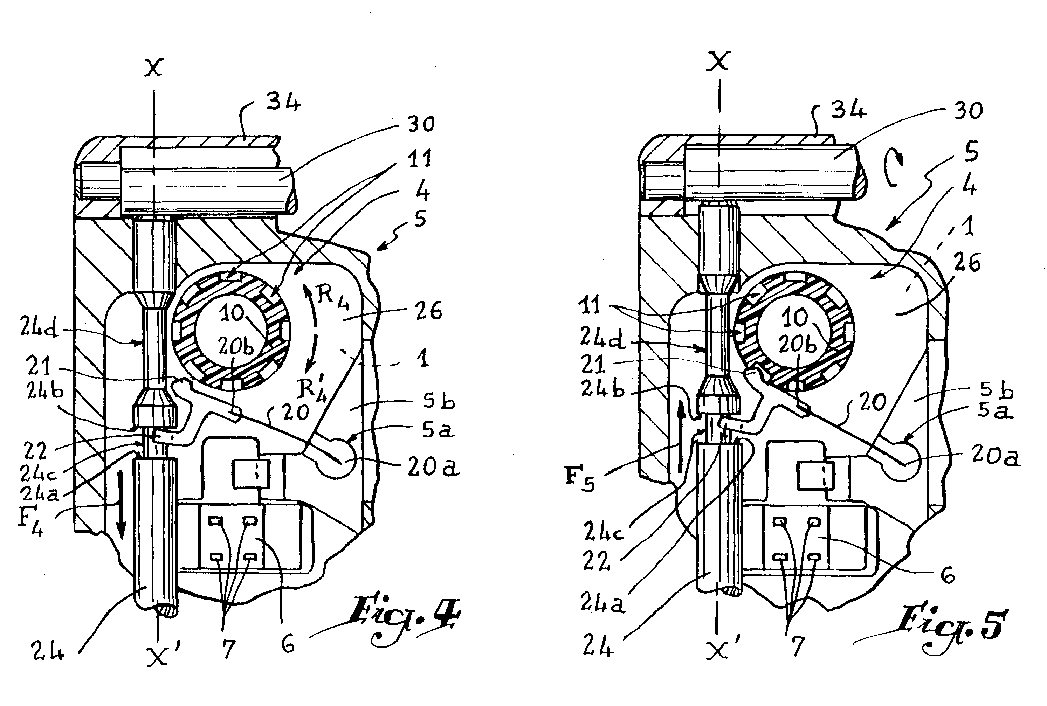

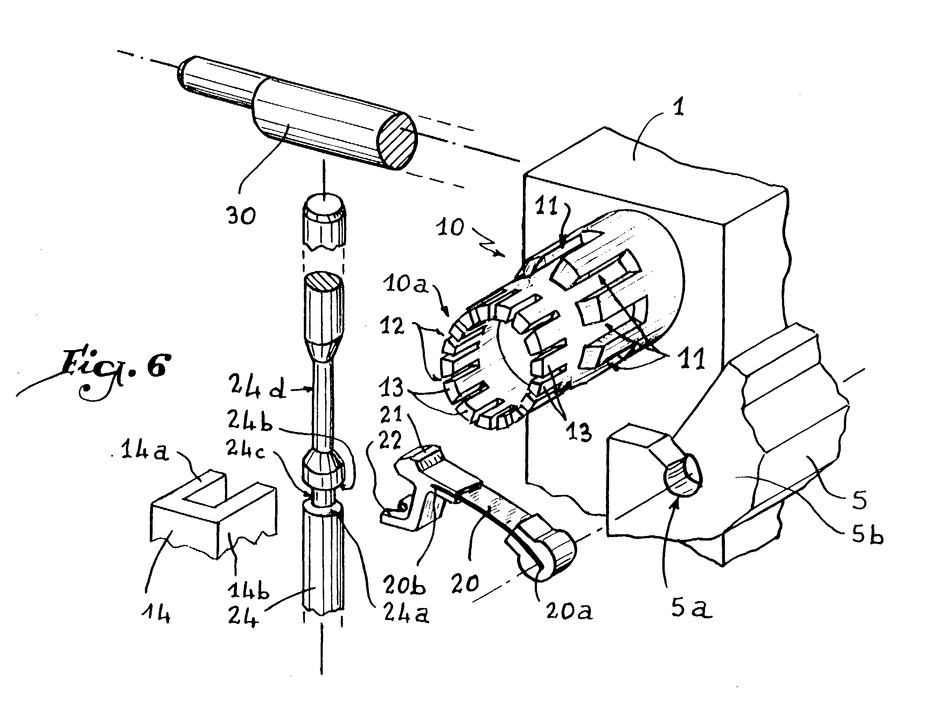

La languette 20 porte, à son extrémité libre 20b, une patte 22 en forme de fourche, qui est réalisée de façon monobloc avec le bec 21 en étant surmoulée avec lui sur l'extrémité libre 20b de la languette 20. Cependant, d'autres méthodes de réalisation du bec 21 et de la patte 22 peuvent être envisagées et, notamment, le pliage de l'extrémité libre de la languette 20. La patte 22 est destinée à coopérer avec une tige 24 munie d'épaulements 24a, 24b de telle sorte que la fourche peut enserrer la tige 24 dans une partie de diamètre réduit 24c entre deux épaulements 24a ou 24b. La tige 24 est mobile en translation, parallèlement à son plus grand axe XX', c'est-à-dire à sa plus grande dimension. On a représenté aux figures 4 et 5 avec les flèches F₄ et F₅ les deux sens de déplacement de la tige 24. Il apparaît en comparant les figures 4 et 5 qu'en fonction de la position de la tige 24, la patte 22 et le bec 21 sont déplacés entre les deux positions libre ou de blocage des figures 4 et 5.

Plus précisément, dans la position de la figure 4, la tige 24 est déplacée dans la direction de la flèche F₄ de telle sorte que l'épaulement 24b pousse la patte 22 dans la direction de la flèche F₄ et que le bec 21 est dégagé par rapport aux rainures 11. La coupelle 10 est alors libre en rotation, ce qui est représenté par les flèches R₄ et R'₄. L'actionneur 1 peut alors être librement activé pour provoquer l'enroulement ou le déroulement de l'arcade 2 correspondante sur la poulie 3.

Dans la position de la figure 5, la tige 24 a été déplacée dans le sens de la flèche F₅. L'épaulement 24b ne s'oppose pas au mouvement de la languette 20 sous l'effet de son élasticité. La languette 20 revient spontanément dans la position de la figure 5 où le bec 21 pénètre dans l'une des rainures 11.

La tige 24 présente une partie 24d de plus faible diamètre à proximité de la coupelle 10, afin d'éviter tout risque de coincement. Les épaulements 24a et 24b de la tige 24 pourraient également être réalisés par des bagues rapportées sur la tige 24 qui aurait alors un unique diamètre équivalent à celui des parties 24c et 24d.

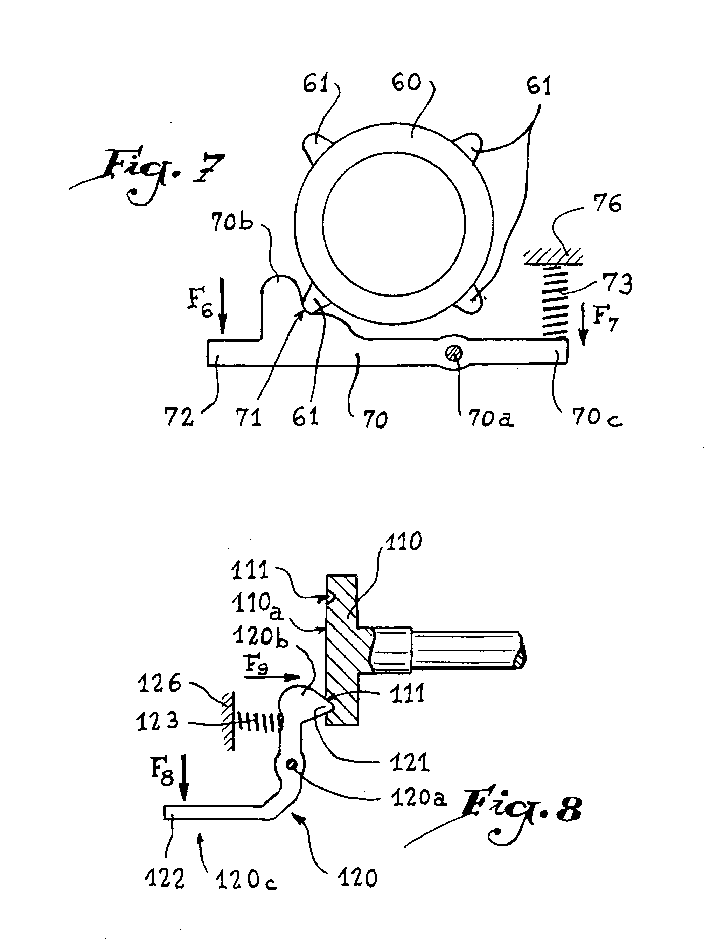

Comme il apparaît plus clairement à la figure 6, la coupelle 10 comprend, à proximité de son bord le plus éloigné du rotor de l'actionneur 1, une série de fentes 12 définissant entre elles des dents 13. Ces dents et ces fentes sont destinées à coopérer avec un détecteur 14, par exemple optique, dont les deux branches 14a et 14b sont disposées, l'une à l'intérieur et l'autre à l'extérieur de la coupelle 10, pour déterminer la position angulaire de cette coupelle. En d'autres termes, le détecteur 14 est un codeur permettant de détecter la position angulaire de la coupelle 10 et donc de la poulie 3. Il peut être associé au dispositif de commande électrique de l'actionneur 1.

Les dents 13 de la coupelle 10 séparées par les fentes 12 sont prévues sur une partie d'extrémité 10a dont le diamètre est plus faible que la partie de la coupelle 10 dans laquelle sont ménagées les rainures 11. Cette différence de diamètre permet que, lorsque l'actionneur 1 est extrait de l'emplacement 4 du boîtier 5, notamment lors d'une opération de maintenance, le bec 21 de la languette 20 n'a pas tendance à venir se bloquer dans les fentes 12 sous l'effet de l'élasticité de la languette 20. En d'autres termes, cette différence de diamètre de la partie d'extrémité 10a de la coupelle 10 par rapport à la partie principale facilite l'extraction de l'actionneur 1 de son emplacement.

Comme il apparaît plus clairement aux figures 2 et 3, une tige 24 peut servir à commander plusieurs languettes 20 appartenant à plusieurs actionneurs adjacents, par exemple, aux quatre actionneurs d'une colonne. Cette construction permet de limiter le nombre de pièces en mouvement pour la commande des différents becs 21. Les différentes tiges 24 sont parallèles les unes aux autres et disposées à proximité des extrémités libres 20b des languettes 20 de façon à coopérer avec les pattes 22 correspondantes. Les tiges 24 sont commandées en translation, c'est-à-dire en déplacement selon les flèches F₄ et F₅, grâce à un excentrique 30 substantiellement perpendiculaire aux tiges 24. L'excentrique 30 est commandé à travers un réducteur 31 par un moteur 32, par exemple électrique, dont le pignon de sortie 33 est visible à la figure 3. Un capot 34 protège les éléments 30 à 32.

Le fonctionnement est le suivant :

Avant que le métier à tisser ne soit mis en fonctionnement, le moteur électrique 32 est commandé de telle sorte que son pignon 33 entraîne, à travers le réducteur 31, l'excentrique 30 jusqu'à la position de la figure 4, dans laquelle il repousse les différentes tiges 24, de telle sorte que les becs 21 sont éloignés des coupelles 10. Dans cette position, les différents actiorneurs 1 peuvent être mis en mouvement.

Lorsqu'il est nécessaire de verrouiller en position le dispositif de formation de la foule comprenant les actionneurs 1, le pignon 32 est entraîné en sens inverse, de telle sorte que l'excentrique 30 atteint la position de la figure 5 et que les différents becs 21 viennent en prise à l'intérieur des rainures 11 des coupelles 10 correspondantes. Les positions de l'excentrique 30 représentées aux figures 4 et 5 sont deux positions stables, en butée contre le boîtier 5 ou le capot 34. L'excentrique demeure donc dans chacune de ces positions lorsque le moteur 32 n'est pas alimenté. L'alimentation électrique du moteur 32 peut donc être coupée lorsqu'aucun mouvement de l'excentrique 30 n'est prévu, ce qui permet de limiter la consommation électrique de l'ensemble.

La position par défaut du moteur 32, c'est-à-dire sa position en cas de coupure de courant, notamment lors des vacances, d'une fin de semaine ou en cas de disjonction de l'installation électrique, correspond de préférence à la position de l'excentrique 30 représentée à la figure 5, de sorte que, dans ce cas, tous les actionneurs sont immobilisés. Une batterie de secours est avantageusement prévue pour l'alimentation du moteur 32 en cas de coupure de courant de secteur. Cette batterie permet au moteur de déplacer l'excentrique 30 jusqu'à la position de la figure 5.

Dans le second mode de réalisation de l'invention représenté à la figure 7, les éléments analogues à ceux du mode de réalisation des figures 1 à 5 portent des références identiques augmentées de 50. Une coupelle 60 est prévue pour être entraînée par un rotor d'un actionneur rotatif électrique non représenté. La coupelle 60 porte des extensions 61 en forme de dents disposées sur sa surface radiale périphérique. Par ailleurs, une languette 70 est articulée autour d'un point fixe 70a matérialisé par un axe de pivotement. La languette 70 est pourvue, au niveau d'une extrémité 70**b**, d'une encoche 71 de réception de l'une des dents 61 de la coupelle 60. A proximité de l'encoche 71, la languette 70 porte une patte 72 prévue pour recevoir un signal de commande représenté par la flèche F₆. A son extrémité 70c opposée à l'extrémité 70b, la languette 70 est connectée à un ressort 73 accroché à une partie fixe 76 d'un boîtier contenant l'actionneur qui entraîne la coupelle 60 en rotation.

Le fonctionnement est le suivant :

Sous l'effet de l'effort de poussée F₇ exercé par le ressort 73 sur l'exrémité 70c, l'extrémité 70b de la languette 70 est en permanence dirigée vers la coupelle 60, de sorte que l'encoche 71 vient en prise avec l'une des dents 61. La coupelle est ainsi bloquée. Lorsqu'il est souhaitable de déverrouiller la coupelle 60, un signal de commande est exercé sur la patte 72 comme représenté par la flèche F₆, ce qui fait pivoter la languette 70 dans le sens trigonométrique à la figure 7 et a pour effet d'éloigner l'encoche 71 des dents 61 de la coupelle 60. La coupelle 60 peut alors tourner librement. Dès que l'effort F₆ est supprimé, la languette 70 pivote dans le sens des aiguilles d'une montre à la figure 7, de sorte que l'encoche 71 vient en prise avec l'une des dents 61 sous l'effet de l'effort F₇ exercé par le ressort 73.

Dans le troisième mode de réalisation de l'invention représenté à la figure 8, les éléments analogues à ceux du mode de réalisation des figures 1 à 5 portent des références identiques augmentées de 100. Une coupelle 110 est prévue pour être entraînée en rotation par le rotor d'un actionneur rotatif électrique non représenté. Sur sa surface radiale d'extrémité 110a, la coupelle 110 porte des encoches 111.

Par ailleurs, une languette coudée 120 est articulée autour d'un point fixe 120a. A une première extrémité 120b, la languette 120 porte une pointe ou bec 121 destiné à pénétrer sélectivement dans l'une des encoches 111. A son autre extrémité 120c, la languette 120 est conformée en une patte 122 sur laquelle peut être exercé un signal de commande représenté par la flèche F₈. Un ressort 123 est disposé entre l'extrémité 120b de la languette 120 et une partie fixe 126 d'un boîtier non représenté. Le ressort 123 travaille en compression, de sorte qu'il a tendance à pousser la pointe 121 en direction de l'une des encoches 111, ce qui est représenté par l'effort F₉ à la figure 8.

Comme précédemment, tant qu'il n'est pas exercé d'effort sur la patte 122, la pointe 121 reste en prise dans l'une des encoches 111. Lorsqu'on souhaite que la coupelle 110 puisse tourner, un effort est exercé dans le sens représenté par la flèche F₈, de sorte que la languette 120 pivote dans le sens trigonométrique autour du point fixe 120a et libère la coupelle 110. Dès que le signal de commande F₈ est annulé, l'effort F₉ exercé par le ressort 123 pousse la pointe ou bec 121 vers la coupelle 110, de sorte qu'elle vient en prise dans l'une des encoches 111.

Dans les second et troisième modes de réalisation de l'invention représentés aux figures 7 et 8, les encoches 71 et 111 et les parties mâles 61 et 121 ont des formes coniques ou arrondies, ce qui permet un mouvement d'éjection des éléments en prise contre la force des ressorts 73 et 123 en cas de surcharge des coupelles 60 et 110. Ceci constitue une caractéristique de sécurité du dispositif qui évite sa destruction en cas de surcharge importante exercée sur l'actionneur.

L'invention a été représentée avec des languettes portant des reliefs de blocage de la coupelle. L'invention est également applicable avec une languette pourvu d'un patin apte à venir en appui sur une surface radiale externe de la coupelle afin de l'immobiliser par adhérence.

Bien que décrite essentiellement en référence à un dispositif de blocage pour actionneur de mécanique Jacquard, l'invention est également applicable aux métiers à tisser équipés de ratières et aux machines textiles en général et, en particulier aux machines de bonneterie pour la commande des aiguilles.

## Revendications

1. Dispositif de blocage d'un actionneur rotatif électrique (1) pour la formation de la foule sur un métier à tisser, ledit actionneur étant muni d'un rotor d'entraînement d'une poulie (3) pour l'enroulement d'une arcade, caractérisé en ce qu'il comprend une coupelle (10 ; 60 ; 110) de blocage, entraînée par ledit rotor, et une languette commandée (20 ; 70 ; 120), portant des moyens (21 ; 71 ; 121) d'immobilisation en rotation de ladite coupelle.

2. Dispositif de blocage selon la revendication 1, caractérisé en ce que ladite coupelle porte au moins un premier relief (11 ; 61 ; 111), ladite languette portant au moins un second relief (21 ; 71 ; 121) complémentaire apte à venir en prise avec ledit premier relief.

3. Dispositif de blocage selon la revendication 2, caractérisé en ce que ladite languette (20 ; 70 ; 120) est pourvue d'un point fixe (20a ; 70a ; 120a) et d'une extrémité (20b ; 70b ; 120b) mobile portant ledit second relief (21 ; 71 ; 121) et chargée par des moyens élastiques (20 ; 73 ; 123) vers ledit premier relief (11 ; 61 ; 111).

4. Dispositif de blocage selon la revendication 3, caractérisé en ce que lesdits moyens élastiques (20 ; 73 ; 123) permettent un mouvement d'éjection desdits premier (11 ; ; 61 ; 111) et second (21 ; 71 ; 121) reliefs en cas de surcharge de ladite coupelle (10 ; 60 ; 110), l'un au moins desdits premier et second reliefs ayant une forme globalement conique, tronconique, en triangle ou arrondie.

5. Dispositif de blocage selon l'une des revendications 2 à 4, caractérisé en ce que ladite languette (20 ; 70 ; 120) porte une patte (22 ; 72 ; 122) de manoeuvre de ladite languette, entre une position où ledit second relief (21 ; 71 ; 121). est en prise avec ledit premier relief (11 ; 61 ; 111) et une position où ledit second relief est dégagé par rapport audit premier relief.

6. Dispositif de blocage selon la revendication 5, caractérisé en ce que ledit premier relief (21 ; 71 ; 121) et/ou ladite patte (22 ; 72 ; 122) de manoeuvre sont surmoulés à l'extrémité mobile (20b ; 70b ; 120b) de ladite languétte (20 ; 70 ; 120).

7. Dispositif de blocage selon la revendication 5, caractérisé en ce qu'il comprend une tige (24) munie d'au moins un épaulement (24b) et s'étendant à proximité d'une extrémité mobile (20b) de ladite languette (20), ladite tige étant mobile en translation suivant son plus grand axe (XX'), la patte (22) de manoeuvre de ladite languette étant apte à être déplacée par ledit épaulement de ladite tige.

8. Dispositif de blocage selon l'une des revendications précédentes, caractérisé en ce qu'il comprend un moyen (24) de commande simultanée de plusieurs languettes (20) aptes à coopérer avec des coupelles (10) appartenant à plusieurs actionneurs (1) adjacents.

9. Dispositif de blocage selon la revendication 8, adapté au blocage des actionneurs (1) d'un module comprenant plusieurs actionneurs, caractérisé en ce qu'il comprend plusieurs tiges (24) s'étendant parallèlement les unes aux autres, à proximité des extrémités libres (20b) desdites languettes (20), lesdites tiges étant commandées en translation par un excentrique (30) commun s'étendant de façon substantiellement perpendiculaire auxdites tiges.

10. Dispositif de blocage selon l'une des revendications précédentes, caractérisé en ce que ladite coupelle (10) est apte à coopérer avec un détecteur (14) pour déterminer la position angulaire dudit actionneur (1).

11. Dispositif de blocage selon l'une des revendications précédentes, caractérisé en ce que ladite languette (20 ; 70 ; 120) est commandée entre deux positions stables de blocage et de libération de ladite coupelle (10 ; 60 ; 110).

12. Dispositif de blocage selon la revendication 11, caractérisé en ce que la chaîne cinématique de ladite languette (20 ; 70 ; 120) comprend un excentrique (30) entraîné par un moteur électrique (32) et mobile entre deux positions stables lorsque ledit moteur n'est pas alimenté.

13. Mécanique d'armure de métier à tisser, caractérisée en ce qu'elle comprend au moins un actionneur (1) équipé d'un dispositif de blocage (10-24 ; 60-73 ; 110-123) conforme à l'une des revendications précédentes.

14. Métier à tisser, caractérisé en ce qu'il comprend une mécanique d'armure selon la revendication 13.

## Claims

1. A device for locking an electric rotary actuator (1) for forming the shed on a loom, said actuator being provided with a rotor for driving a pulley (3) for winding up a hamess cord, characterised in that it comprises a locking cap (10; 60; 110), entrained by said rotor, and a controlled tongue (20; 70; 120), bearing means (21; 71; 121) for immobilising said cap in rotation.

2. A locking device according to Claim 1, characterised in that said cap bears at least one first relief (11; 61; 111), said tongue bearing at least one complementary second relief (21; 71; 121) able to engage with said first relief.

3. A locking device according to Claim 2, characterised in that said tongue (20; 70; 120) is provided with a fixed point (20a; 70a; 120a) and a mobile end (20b; 70b; 120b) bearing said second relief (21: 71; 121) and loaded by elastic means (20; 73; 123) towards said first relief (11; 61; 111).

4. A locking device according to Claim 3, characterised in that said elastic means (20; 73; 123) permit a movement of ejection of said first (11; 61; 111) and second (21; 71; 121) reliefs in the event of said cap (10; 60; 110) being overloaded, at least one of said first and second reliefs having an overall conical. frustoconical, triangular or rounded shape.

5. A locking device according to one of Claims 2 to 4, characterised in that said tongue (20; 70; 120) bears a lug (22; 72; 122) for manoeuvring said tongue, between a position in which said second relief (21; 71; 121) is engaged with said first relief (11; 61; 111) and a position in which said second relief is disengaged from said first relief.

6. A locking device according to Claim 5, characterised in that said first relief (21; 71; 121) and/or said manoeuvring lug (22: 72; 122) are moulded on to the mobile end (20b; 70b; 120b) of said tongue (20; 70: 120).

7. A locking device according to Claim 5, charactensed in that it comprises a rod (24) provided with at least one shoulder (24b) and extending close to one mobile end (20b) of said tongue (20), said rod being mobile in translation along its longest axis (XX'), the manoeuvring lug (22) of said tongue being able to be displaced by said shoulder of said rod.

8. A locking device according to one of the preceding claims, characterised in that it comprises a means (24) for simultaneously controlling a plurality of tongues (20) which are able to cooperate with caps (10) belonging to a plurality of adjacent actuators (1).

9. A locking device according to Claim 8, suitable for locking the actuators (1) of a module comprising a plurality of actuators, characterised in that it comprises a plurality of rods (24) extending parallel to each other, close to the free ends (20b) of said tongues (20), said rods being controlled in translation by a common eccentric (30) extending substantially perpendicular to said rods.

10. A locking device according to one of the preceding claims, characterised in that said cap (10) is able to cooperate with a detector (14) for determining the angular position of said actuator (1).

11. A locking device according to one of the preceding claims, characterised in that said tongue (20; 70; 120) is controlled between two stable locking and release positions of said cap (10; 60; 110).

12. A locking device according to Claim 11, characterised in that the kinematic chain of said tongue (20; 70; 120) comprises an eccentric (30) driven by an electric motor (32) and mobile between two stable positions when said motor is not supplied with current.

13. A dobby mechanism for a loom, characterised in that it comprises at least one actuator (1) equipped with a locking device (10-24; 60-73; 110-123) according to one of the preceding claims.

14. A loom, characterised in that it comprises a Bobby mechanism according to Claim 13.

## Patentansprüche

1. Vorrichtung zum Verriegeln eines rotierenden elektrischen Betätigungselementes (1) für die Fachbildung an einem Webstuhl, wobei das Betätigungselement mit einem Antriebsrotor für eine Seilrolle (3) zum Aufwickeln einer Harnischkordel ausgerüstet ist, dadurch gekennzeichnet, daß sie eine von dem Rotor angetriebene Verriegelungsschale (10; 60; 110) und eine gesteuerte Zunge (20; 70; 120) umfaßt, die Mittel (21, 71, 121) zur Festlegung bezüglich Drehung der Schale trägt.

2. Vorrichtung zum Verriegeln nach Anspruch 1, dadurch gekennzeichnet, daß die Schale mindestens ein erstes Profil (11, 61, 111) trägt, wobei die Zunge mindestens ein zweites komplementäres Profil (21, 71, 121) trägt, das sich für eine Ineingriffnahme mit dem ersten Profil eignet.

3. Vorrichtung zum Verriegeln nach Anspruch 2, dadurch gekennzeichnet, daß die Zunge (20; 70; 120) mit einem festen Punkt (20a; 70a; 120a) und einem das zweite Profil (21, 71; 121) tragenden Ende (20b; 70b; 120b) versehen ist, das durch elastische Mittel (20; 73, 123) zum ersten Profil hin vorgespannt ist.

4. Vorrichtung zum Verriegeln nach Anspruch 3, dadurch gekennzeichnet, daß die elastischen Mittel (20; 73; 123) eine Auswurfbewegung des ersten (11, 61, 111) und zweiten (21; 71; 121) Profils im Fall der Überlast der Schale (10; 60; 110) gestatten, wobei mindestens eines des ersten und zweiten Profils eine im ganzen genommene konische, Kegelstumpf-, Dreieck- oder abgerundete Form aufweist.

5. Vorrichtung zum Verriegeln nach einem der Ansprüche 2 bis 4, dadurch gekennzeichnet, daß die Zunge (20; 70; 120) einen Ansatz (22; 72; 122) zum Betätigen der Zunge zwischen einer Stellung, in der das zweite Profil (21; 71; 121) in Eingriff mit dem ersten Profil (11; 61; 111) ist und einer Stellung in der das zweite Profil außer Eingriff zu dem ersten Profil ist.

6. Vorrichtung zum Verriegeln nach Anspruch 5, dadurch gekennzeichnet, daß das erste Profil (21; 71; 121) und/oder der Betätigungsansatz (22; 72; 122) auf dem beweglichen Ende (20b; 70b; 120b) der Zunge (20; 70; 120) aufgeformt sind.

7. Vorrichtung zum Verriegeln nach Anspruch 5, dadurch gekennzeichnet, daß sie einen Stab (24) umfaßt, der mindestens mit einer Schulter (24b) versehen ist und sich in der Nähe eines beweglichen Endes (20b) der Zunge (20) erstreckt, wobei der Stab, seiner großen Achse folgend, translatorisch bewegbar ist, wobei der Betätigungsansatz der Zunge für eine Verschiebung der Schulter des Stabes geeignet ist.

8. Vorrichtung zum Verriegeln nach einem der vorhergehenden Ansprüche, dadurch gekennzeichnet, daß sie ein Mittel (24) zur simultanen Steuerung von mehreren Zungen (20) umfaßt, die geeignet sind, mit mehreren zu benachbarten Betätigungselementen (1) gehörenden Schalen (10) zusammenzuarbeiten.

9. Vorrichtung zum Verriegeln nach Anspruch 8, angepaßt an eine Verriegelung von Betätigungselementen (1) eines Moduls mit mehreren Betätigungselementen, dadurch gekennzeichnet, daß sie mehrere Stäbe (24) umfaßt, die sich parallel zueinander in der Nähe der freien Enden (20b) der Zungen (20) erstrecken, wobei die Stäbe in translatorischer Bewegung durch einen gemeinsamen Exzenter (30) gesteuert werden, der sich im Wesentlichen senkrecht zu den Stäben erstreckt.

10. Vorrichtung zum Verriegeln nach einem der vorhergehenden Ansprüche, dadurch gekennzeichnet, daß die Schale dazu ausgebildet ist, mit einem Detektor (14) zusammenzuarbeiten, um die Winkelposition des Betätigungselementes (1) zu bestimmen.

11. Vorrichtung zum Verriegeln nach einem der vor-hergehenden Ansprüche, dadurch gekennzeichnet, daß die Zunge (20, 70; 120) zwischen zwei stabilen Positionen der Verriegelung und der Freisetzung der Schale (10; 60; 110) gesteuert wird.

12. Vorrichtung zum Verriegeln nach Anspruch 11, dadurch gekennzeichnet, daß die kinematische Kette der Zunge (20; 70; 120) einen Exzenter (30) umfaßt, der von einen elektrischen Motor (32) angetrieben wird und zwischen zwei stabilen Positionen bewegbar ist, wenn der Motor versorgt wird.

13. Schaftmaschine eines Webstuhls, dadurch gekennzeichnet, daß sie mindestens ein Betätigungselement (1) umfaßt, der mit einer Vorrichtung zur Verriegelung (10 - 20, 60 - 73; 110 - 123) entsprechend einem der vorhergehenden Ansprüche ausgerüstet ist.

14. Webstuhl, dadurch gekennzeichnet, daß er eine Schaftmaschine nach Anspruch 13 umfaßt.
